# EUROPEAN PATENT SPECIFICATION

(11) **EP 0 427 400 B1**
(45) Date of publication and mention of the grant of the patent: **07.05.1997**
(21) Application number: 90311123.5
(22) Date of filing: 11.10.1990
(51) Int. Cl.: H04N 9/04, H04N 9/64

(54) **Video signal processing for a camera device**
Videosignalverarbeitung für eine Kamera
Traitement du signal vidéo d'une caméra

(30) Priority: 19.10.1989 JP 272340/89
(43) Date of publication of application: 15.05.1991
(73) Proprietor: SONY CORPORATION, Tokyo 141 (JP)
(72) Inventor: Matsumoto, Hiroaki, Patents Division, Sony Corp., Tokyo 141 (JP); Fukuda, Tokuya, Patents Division, Sony Corp., Tokyo 141 (JP); Senda, Tetsuya, Patents Division, Sony Corp., Tokyo 141 (JP)
(74) Representative: Harris, Ian Richard

(56) References cited:
- EP-A- 0 291 354
- EP-A- 0 308 252
- EP-A- 0 368 614

## Description

This invention relates to digital camera apparatus.

A solid-state colour imager is known in which a four colour filter made-up of the three complementary colours, cyan (CY), magenta (M) and yellow (Ye), plus green (G) arranged in a checkered pattern is combined with a solid state imager element. An example of such a solid-state imager is found in Japanese laid-open patent specification 59/161989.

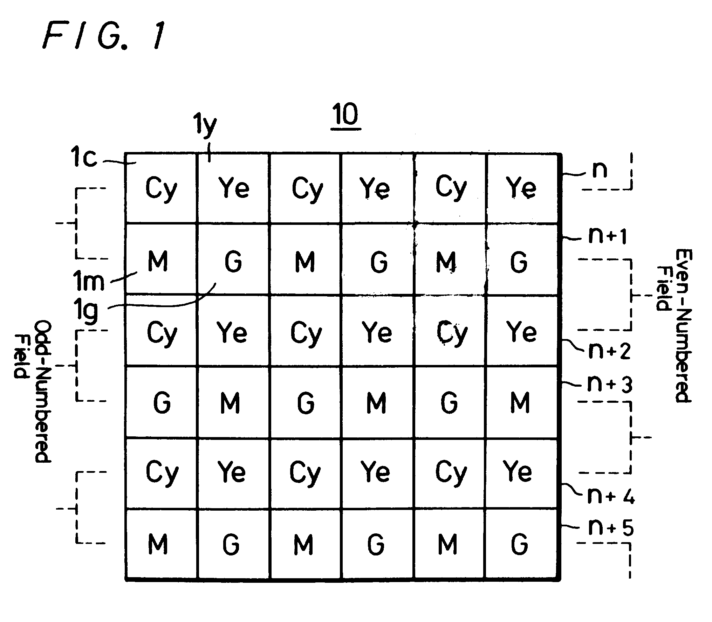

Figure 1 shows a colour filter 10 in which cyan and yellow filter elements 1c and 1y are alternately arrayed on row n, and magenta and green filter elements 1m and 1g are alternately arrayed on a row (n + 1). The rows then alternate between lines of cyan and yellow filter elements and rows of magenta and green filter elements. The pattern arrangement of the cyan and yellow filter elements in the rows n, (n + 2) and (n + 4) are the same, however, the pattern arrangements of the magenta and green filter elements in the rows (n + 1), (n + 3) and (n + 5) are opposite in phase, that is, they are offset by one filter element every row.

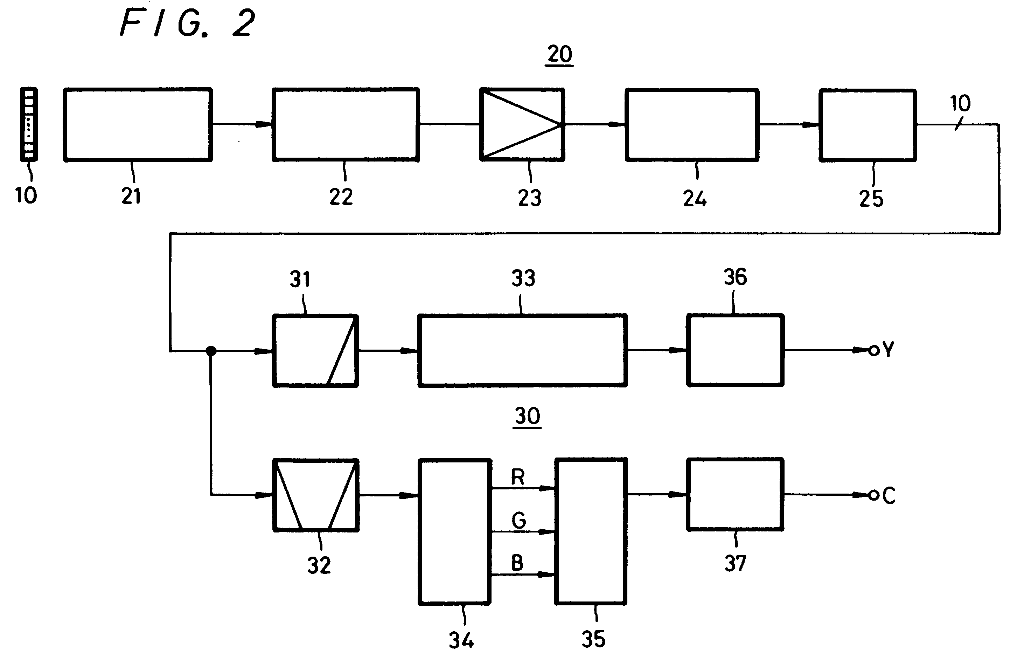

In Figure 2, a solid-state colour imager system comprises an analogue system 20 and a digital signal processing system 30. In the analogue signal system 20, a solid state imager element 21 is provided in an opposing relation to the colour filter 10 that is formed as shown in Figure 1. The imager element 21 includes light receiving picture elements arranged in a two-dimensional manner, that is, in an X-Y matrix form, and transfer elements for transferring signal charges of respective picture elements, for example, when the imager element 21 is a charge-coupled device (CCD). An output signal from the imager element 21 is supplied through a correlative double sampling circuit 22 to an automatic gain control (AGC) amplifier 23. An output from the AGC amplifier 23 is sampled and held by a sample and hold circuit 24, and an output from the sample and hold circuit 24 is supplied to an analogue-to-digital (A/D) converter 25, in which it is converted into a digital signal of, for example, ten bits.

In the digital signal processing system 30, the digital signal from the A/D converter 25 is supplied to a low-pass filter 31 and to a bandpass filter 32. An output from the low-pass filter 31 is supplied to a luminance signal processing circuit 33, in which it undergoes necessary signal processing, such as aperture correction and gamma correction. On the other hand, an output of the bandpass filter 32 is supplied to a matrix circuit 34, in which it is processed to provide three primary colour signals, red, green and blue (R, G and B). The red, green and blue primary colour signals are supplied to a colour signal processing circuit 35, in which they undergo necessary signal processing, such as white balance adjustment, gamma correction, encoding and hue correction. With this solid-state colour imager, since the signal processing is performed in a digital fashion as described above, it can be made compact in size and requires relatively low power.

The output from the luminance signal processing circuit 33 and the output from the colour signal processing circuit 35 are supplied to digital-to-analogue (D/A) converters 36 and 37, respectively, wherein they are converted into an analogue luminance signal Y and an analogue colour signal C, respectively.

In the operation of the colour solid-state imager described above, the light reflected from an object is spatially modulated by each of the filter elements of the colour filter 10 and each modulated light beam is photoelectrically converted by each respective light receiving element (not shown) of the imager element 21 and then sampled. In the sampling operation, a sampling frequency fsp is selected to be four times as high as the colour sub-carrier frequency fsc, for example, fsp may equal 14.3 MHz. Further, a repetitive frequency of the colour filter 10 is selected to be about half the sampling frequency fsp.

In the odd-numbered field, two rows of the light receiving picture elements corresponding to the row n and the row (n + 1); the row (n + 2) and the row (n + 3); and so on, of the colour filter 10 are horizontally scanned at the same time sequentially to generate the photoelectric-converted outputs at every two columns. That is, the output signals are calculated at every four picture elements of two rows and two columns. In the even-numbered field, two rows of the light receiving elements corresponding to the row (n + 1) and the row (n + 2); the row (n + 3) and the row (n + 4) and so on of the colour filter 10 are horizontally scanned at the same time sequentially to generate the photoelectrically converted outputs at every two columns.

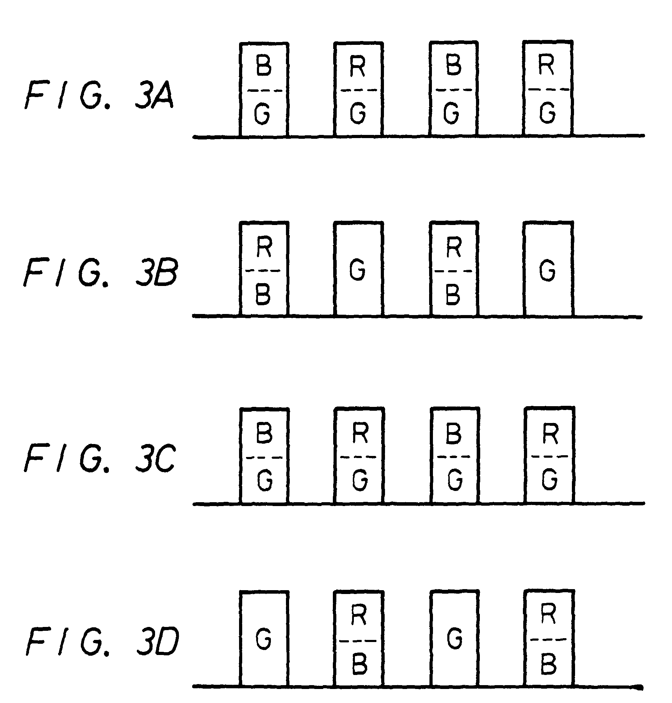

The light receiving picture elements corresponding to the cyan and magenta filter elements 1c and 1m of the row n and the row (n + 1) derive signal components (B + G) and (R + B), respectively, and the light receiving picture elements corresponding to the yellow and green filter elements 1y and 1g derive signal components (R + G) and G, respectively, as shown in Figures 3A and 3B.

Further, the light receiving elements corresponding to the cyan and green filter elements 1c and 1g of the row (n + 2) and the row (n + 3), respectively, derive signal components (B + G) and G, and the light receiving picture elements corresponding to the yellow and magenta filter elements 1y and 1m derive signal components (R + G) and (R + B), respectively, as shown in Figures 3C and 3D.

In the horizontal scanning of the odd-numbered and even-numbered fields, a total sum Ss of the output signals generated at every four picture elements of two rows and two columns is expressed as: Ss = (2R + 3G + 2B). Thereafter, the signal is processed by the low-pass filter 31 and the resultant signal is a luminance signal that is uniform and compensates for any lens distortion.

If a sum of the output signals of each of the columns is calculated at every four picture elements of two rows and two columns on the row n and the row (n + 1) in the odd-numbered field and a difference between the sum signals of each of the columns is calculated, then a differential signal Sdb is expressed as:$\text{Sdb = [(B + G) + (R + B)] - [(R + G) + G)] = 2B - G}$

Similarly, if a sum of output signals of each of the columns is calculated at every four picture elements of two rows and two columns on the row (n + 2) and the row (n + 3) and a difference between the sum signals of each of the columns is calculated, then a differential signal Sdr is expressed as:$\text{Sdr = [(B + G) + G)] - [(R + G) + (R + B)] = - (2R - G)}$

Moreover, the same differential signals Sdb and Sdr are obtained on the row (n + 1), the row (n + 2), the row (n + 3) and the row (n + 4) of the even numbered field.

The differential signals, Sbd and Sdr, are sub-carrier chrominance signal components that are formed on the basis of the spatial modulation performed by the respective filter elements of the colour filter 10. The repetitive frequencies thereof become half of the sampling frequency fsp, that is, twice as high as the colour sub-carrier frequency fsc, for example, fsp may equal 7.16 MHz.

Nevertheless, in this colour solid-state imager the level of the analogue carrier chrominance signal component supplied from the AGC amplifier 23 is decreased, for example, to 1/4 to 1/2 of the level of the luminance signal component, so that when the analogue signal is digitally converted by the A/D converter 25, even according to the linear quantization process, the accuracy of the carrier chrominance signal is about eight to nine bits for the standard input level equivalent, which is, for example, ten bits.

Further, when a dynamic range that is three times as wide as the standard input level is maintained by the gamma correction circuit, the high-level region is compressed, so that with the standard input level the accuracy of the carrier chrominance signal component is decreased to about six to seven bits.

As a result, fine gradation of the colour signal cannot be obtained and a so-called false contour occurs in the reproduced picture, in which there are step changes in the brightness of certain colours in place of the desired gradual change in brightness. Furthermore, a satisfactory signal-to-noise (S/N) ratio cannot be obtained due to the quantization noise produced by the analogue-to-digital conversion.

According to the present invention there is provided a digital camera apparatus comprising: a colour filter assembly (10) in which colour filter elements of one primary colour and colour filter elements of three complementary colours are arranged in a plurality of rows and columns in a checkered pattern, said pattern comprising first rows along which colour filter elements of said primary colour and colour filter elements of one of said complementary colours are alternately arrayed and second rows along which colour filter elements of the remaining two of said complementary colours are alternately arrayed, said first rows alternating with said second rows; a solid-state imager element (21) having light receiving picture elements arranged in a two-dimensional array, wherein said primary and complementary colour filter elements and said light receiving picture elements are opposed to each other, and from which an analogue luminance signal component and an analogue carrier chrominance signal component are produced upon sampling at a sampling frequency (fsp) by horizontally scanning two adjacent rows of said light receiving picture elements simultaneously; and processing means (30) for digitally processing said analogue luminance signal component and said carrier chrominance signal component for producing a digital luminance signal and a digital chrominance signal; characterised by an emphasizing circuit (26) for emphasizing the level of the analogue chrominance signal near a frequency corresponding to one half of said sampling frequency (fsp) and in that said processing means digitally processes said emphasized carrier chrominance signal component.

Thus an embodiment of the invention comprises a digital camera apparatus having analogue emphasis circuitry and includes a colour filter in which one primary colour filter element and three complementary colour filter elements are arranged in a checkered pattern, and a solid-state imager in which light receiving picture elements are arranged in a two-dimensional manner, wherein the filter elements and the light receiving picture elements are opposed to each other. The imager produces an analogue luminance signal component and an analogue carrier chrominance signal component, each of which results from horizontally scanning two rows of the light receiving picture elements simultaneously. These signal components are processed by a processing circuit in a digital fashion. This digital camera apparatus is further characterized by an emphasizing circuit for emphasizing the carrier chrominance signal component.

The invention will now be described by way of example with reference to the accompanying drawings, throughout which like parts are referred to by like references, and in which:
Figure 1 is a plan view illustrating an arrangement of colour filter elements used in a known solid-state imager;
Figure 2 is a schematic in block diagram form of a known solid-state colour imager;
Figures 3A to 3D are diagrammatic representations showing respective colour signal components for explaining the operation of the imager of Figure 2;
Figure 4 is a schematic in block diagram form of an embodiment of digital camera apparatus according to the present invention; and
Figure 5 is a graphical representation of the characteristics of a main portion of the embodiment of Figure 4.

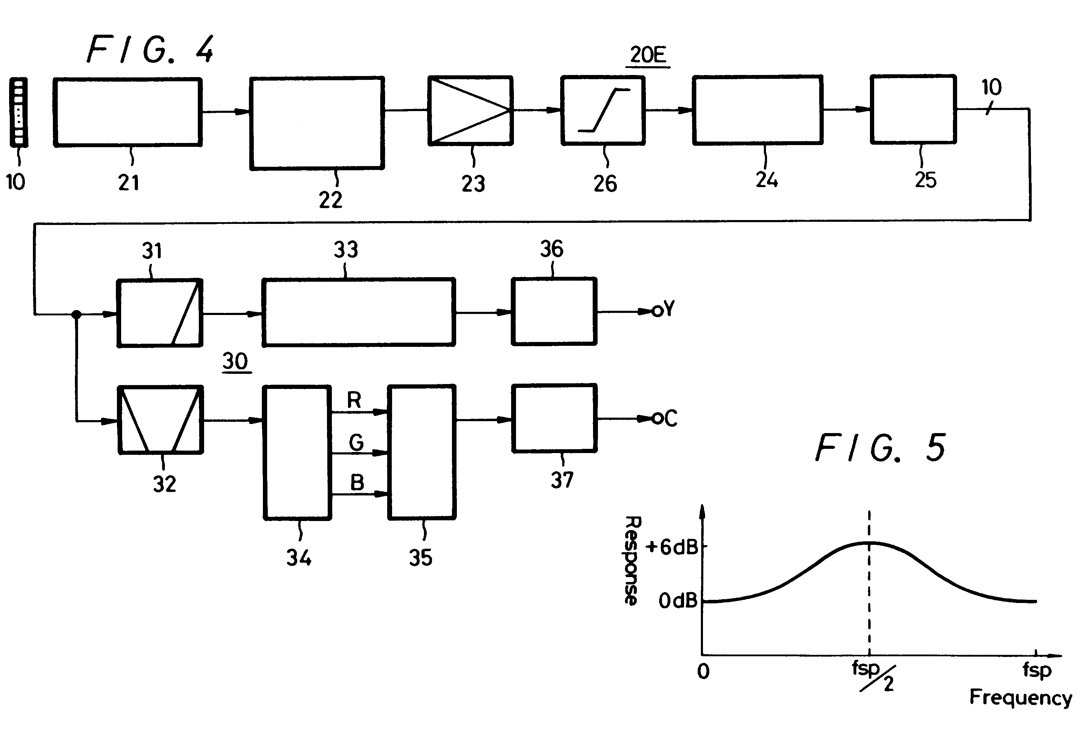

Referring to Figure 4, in an analogue signal system, shown generally at 20E, an emphasizing circuit 26 is connected between an AGC amplifier 23 and a sample and hold circuit 24, and various constants of a matrix circuit 34 are varied accordingly, specifically, the gain constants are varied for de-emphasis. The remainder of the circuit arrangement of Figure 4 is the same as that of Figure 2.

The emphasizing circuit 26 increases, or emphasizes, the level of the analogue carrier chrominance signal by, for example, 6dB near a frequency corresponding to one half the sampling frequency fsp, that is, near a frequency that is twice as high as the colour sub-carrier frequency fsc on the basis of the low frequency and the sampling frequency, as shown by the frequency characteristics response curve of Figure 5.

Thus, the accuracy of the digital carrier chrominance signal component supplied from an A/D convertor 25 is increased by, for example, one bit, whereby fine gradation of colour difference signals can be maintained, the influence of quantization noise can be reduced, and the occurrence of false contour as described above can be reduced.

Because the emphasizing circuit 26 emphasizes the analogue carrier chrominance signal component that results from simultaneously horizontally scanning the light receiving elements of two adjacent rows of the solid-state imager opposing the complementary colour checkered pattern filter, it is possible to provide a digital camera in which the quality of the resultant pictures will not be deteriorated due to the quantization of the colour signal.

## Claims

1. A digital camera apparatus comprising:
a colour filter assembly (10) in which colour filter elements of one primary colour and colour filter elements of three complementary colours are arranged in a plurality of rows and columns in a checkered pattern, said pattern comprising first rows along which colour filter elements of said primary colour and colour filter elements of one of said complementary colours are alternately arrayed and second rows along which colour filter elements of the remaining two of said complementary colours are alternately arrayed, said first rows alternating with said second rows;
a solid-state imager element (21) having light receiving picture elements arranged in a two-dimensional array, wherein said primary and complementary colour filter elements and said light receiving picture elements are opposed to each other, and from which an analogue luminance signal component and an analogue carrier chrominance signal component are produced upon sampling at a sampling frequency (fsp) by horizontally scanning two adjacent rows of said light receiving picture elements simultaneously; and
processing means (30) for digitally processing said analogue luminance signal component and said carrier chrominance signal component for producing a digital luminance signal and a digital chrominance signal;
characterised by
an emphasizing circuit (26) for emphasizing the level of the analogue chrominance signal near a frequency corresponding to one half of said sampling frequency (fsp) and in that said processing means digitally processes said emphasized carrier chrominance signal component.

2. Apparatus according to claim 1 wherein a horizontal scanning output from said light receiving picture elements is supplied through an automatic gain control circuit (23) and a sample and hold circuit (24), for performing said sampling, to an analogue-to-digital converter (25), and said emphasizing circuit (26) is connected between said automatic gain control circuit (23) and said sample and hold circuit (24).

3. Apparatus according to claim 1 wherein said carrier chrominance signal component processing circuit (30) includes a colour matrix circuit (34).

4. Apparatus according to claim 2 wherein an output from said analogue-to-digital converter (25) is separated into a luminance signal component and a carrier chrominance signal component by a filter circuit (36, 37).

5. Apparatus according to claim 2 wherein a repetitive frequency of said colour filter assembly (10), which results from spatial modulation by respective filter elements, is selected to be half the value of the sampling frequency of said sample and hold circuit (24).

## Patentansprüche

1. Digitalkamera, mit:
einer Farbfilterbaugruppe (10), bei der Farbfilterelemente einer Primärfarbe und Farbfilterelemente von drei Komplementärfarben in mehreren Reihen und Spalten in einem Schachbrettmuster angeordnet sind, wobei das Muster erste Reihen aufweist, längs denen Farbfilterelemente der Primärfarbe und Farbfilterelemente einer der Komplementärfarben abwechselnd aufgereiht sind, und zweite Reihen, längs denen Farbfilterelemente der verbleibenden zwei Komplementärfarben abwechselnd aufgereiht sind, wobei sich die ersten Reihen mit den zweiten Reihen abwechseln;
einem Festkörper-Bildabtastelement (21), welches Lichtempfangsbildelemente hat, die in einer zweidimensionalen Matrix angeordnet sind, wobei die Primär- und Komplementärfarbfilterelemente und die Lichtempfangsbildelemente einander gegenüberliegen, und von denen eine analoge Luminanzsignalkomponente und eine analoge Farbchrominanzsignalkomponente beim Abtasten bei einer Abtastfrequenz (fsp) durch gleichzeitiges horizontales Abtasten von zwei benachbarten Reihen der Lichtempfangsbildelemente erzeugt werden; und
einer Verarbeitungseinrichtung (30), um die analoge Luminanzsignalkomponente und die Trägerchrominanzsignalkomponente digital zu verarbeiten, um ein digitales Luminanzsignal und ein digitales Chrominanzsignal zu erzeugen,
**gekennzeichnet durch**
eine Anhebungsschaltung (26) zum Anheben des Pegels des analogen Chrominanzsignals in der Nähe einer Frequenz, die einer Hälfte der Abtastfrequenz (fsp) entspricht, und daß die Verarbeitungseinrichtung die angehobene Trägerchrominanzsignalkomponente digital verarbeitet.

2. Gerät nach Anspruch 1, wobei ein horizontales Abtastausgangssignal von den Lichtempfangsbildelementen über eine automatische Verstärkungsregelschaltung (23) und eine Abtast-Halteschaltung (24) zur Durchführung der Abtastung zu einem Analog-Digital-Umsetzer (25) geliefert wird, und die Emphasisschaltung (26) zwischen der automatischen Verstärkungsregelschaltung (23) und der Abtast-Halteschaltung (24) geschaltet ist.

3. Gerät nach Anspruch 1, wobei die Trägerchrominanzsignalkomponenten-Verarbeitungsschaltung (30) eine Farbmatrixschaltung (34) besitzt.

4. Gerät nach Anspruch 2, wobei ein Ausgangssignal vom Analog-Digital-Umsetzer (25) in eine Luminanzsignalkomponente und eine Trägerchrominanzsignalkomponente durch eine Filterschaltung (36, 37) getrennt wird.

5. Gerät nach Anspruch 2, wobei eine Wiederholungsfrequenz der Farbfilterbaugruppe (10), welche aus einer Raummodulation durch entsprechende Filterelemente resultiert, so ausgewählt wird, daß sie die Hälfte des Wertes des Abtastfrequenz der Abtast-Halteschaltung (24) ist.

## Revendications

1. Caméra numérique comprenant :
un ensemble de filtre de couleur (10) dans lequel des éléments de filtre de couleur d'une couleur primaire et des éléments de filtre de couleur de trois couleurs complémentaires sont disposés dans une pluralité de rangées et de colonnes dans un modèle en échiquier, ledit modèle comprenant des premières rangées le long desquelles des éléments de filtre de couleur de ladite couleur primaire et desdits éléments de filtre de couleur d'une desdites couleurs complémentaires sont alternativement disposés et des secondes rangées le long desquelles des éléments de filtre de couleur de deux desdites couleurs complémentaires restantes sont alternativement disposés, lesdites premières rangées alternant avec lesdites secondes rangées ;
un élément de prise de vue à l'état solide (21) ayant des éléments d'image de réception de lumière disposés dans un réseau bidimensionnel, dans lequel lesdits éléments de filtre de couleur primaire et complémentaire et lesdits éléments d'image de réception de lumière sont opposés l'un à l'autre, et à partir duquel une composante de signal de luminance analogique et une composante de signal de chrominance de porteuse analogique sont produites lors de l'échantillonnage à une fréquence d'échantillonnage (fsp) en balayant simultanément horizontalement deux rangées adjacentes desdits éléments d'image de réception de lumière ; et
un moyen de traitement (30) pour traiter numériquement ladite composante de signal de luminance analogique et ladite composante de signal de chrominance de porteuse pour produire un signal de luminance numérique et un signal de chrominance numérique ; caractérisé par
un circuit d'accentuation (26) pour accentuer le niveau du signal de chrominance analogique près d'une fréquence correspondant à une moitié de ladite fréquence d'échantillonnage (fsp) et en ce que ledit moyen de traitement traite numériquement ladite composante signal de chrominance de porteuse accentué.

2. Appareil selon la revendication 1 dans lequel une sortie de balayage horizontale desdits éléments d'image de réception de lumière est appliquée via un circuit de commande de gain automatique (23) et un circuit d'échantillonnage et de maintien (24) pour réaliser ledit échantillonnage, sur un convertisseur analogique/numérique (25), et ledit circuit d'accentuation (26) est connecté entre ledit circuit de commande de gain automatique (23) et ledit circuit d'échantillonnage et de maintien (24).

3. Appareil selon la revendication 1 dans lequel ledit circuit de traitement de composante de signal de chrominance de porteuse (30) comprend un circuit de matrice de couleur (34).

4. Appareil selon la revendication 2 dans lequel une sortie dudit convertisseur analogique/numérique (25) est séparée en une composante de signal de luminance et une composante de signal de chrominance de porteuse par un circuit de filtre (36, 37).

5. Appareil selon la revendication 2 dans lequel une fréquence répétitive dudit assemblage de filtre de couleur (10), qui résulte de la modulation spatiale par des éléments de filtre respectifs, est sélectionnée pour être la moitié de la valeur de la fréquence d'échantillonnage dudit circuit d'échantillonnage et de maintien (24).
